# EUROPEAN PATENT APPLICATION

(11) **EP 4 383 441 A1**
(43) Date of publication of application: **12.06.2024**
(21) Application number: 22306820.6
(22) Date of filing: 08.12.2022
(51) Int. Cl.: H01M 50/533, H01M 50/586, H01M 50/591, H01M 50/595, H01M 50/593, H01M 4/70

(54) **ELECTRODES CONFIGURATION IN A BATTERY**

(71) Applicant: Automotive Cells Company SE, 92300 Levallois Perret (FR)
(72) Inventor: CHOI, Hangjune, 33200 Bordeaux (FR)
(74) Representative: Alatis

(57) **Abstract**

The invention relates to a battery comprising at least a cathode (10) and an anode (20), the anode comprising a foil (20) covered by an anode coating layer (21), the cathode comprising a foil (10) facing the anode foil (20) and a flexible tab (14) which projects beyond the cathode foil (10) along a vertical direction (X) parallel to the cathode foil plan. Said cathode tab (14) is covered with an electrical insulation cover (12). The anode comprises an extension (22) of the coating layer (21) beyond the anode foil (20), along the vertical direction (X). Said extension (22) is designed so that the cathode tab insulation cover (12) overlaps the extremity of said extension (22) of the anode coating layer (21).

## Description

### TECHNICAL FIELD OF THE INVENTION

The present invention concerns the technical field of electric batteries, in particular lithium-ion batteries used, for instance, to power the traction chain of electric or hybrid vehicles.

More specifically, the invention is related to an innovative electrodes configuration which improves the electrical insulation between a cathode and an anode of such a battery.

### BACKGROUND ART

Some Lithium-ion batteries have a stack architecture comprising of a plurality of anodes (negative electrodes) and cathodes (positive electrodes) which are composed of foils or sheets stacked against each other and separated by a separation sheet (also known as a separator). Each cathode foil (also called current collector and made for instance with aluminium) is covered with a cathode coating layer and each anode foil is covered with an anode coating layer. These coating layers are usually made with non-insulated electrical materials.

It is known that, in this type of battery architecture, cathode foils are generally slightly smaller than anode foils. Furthermore, each cathode and each anode are extended with a connecting tab consisting of a small outgrowth beyond the foil plan. These tabs are flexible and are used to electrically connect the electrodes to external terminals of the battery in order to recover the electrical energy. In addition, during the manufacturing process of the different foil stacks, the positioning of electrodes and separators can be imperfect.

As a result of the above elements, once the battery is assembled, there is a risk that the flexible tab of some cathodes will not be sufficiently far from the short-circuit with the adjacent anodes, despite the presence of the separator. Even if the separator in itself is an electrical insulator, it may not be sufficient for preventing a short circuit around the particular tab region, because this cathode tab region has a much higher possibility of short-circuit risk, as the cathode tab can cross over the border/edge of the anode. Moreover, the chances for the separator to get damaged, torn or punctured must be taken into account, due in particular to its thinness. This has indeed the potential to cause a short-circuit between a cathode tab and an anode. Using a thicker separator could reduce the efficiency of the battery and be more expensive.

It is already known that, to avoid this problem, an electrical insulation cover can be added on each cathode tab to prevent any electrical contact between the cathode tab and adjacent anodes and provide a double insulation between the cathode tab and the anode upper edge. However, a physical gap between this electrical insulation cover of the cathode tab and the coating layer of the cathode foil always remains. This physical gap leaves the metallic cathode foil without protection.

Therefore, one purpose of this invention is to improve the structure of an electrodes stack battery by providing an effective, reliable, economical and easy to implement solution that enhances the insulation between the cathode tabs and the adjacent anodes without adversely affecting the performance of the battery.

### SUMMARY OF THE INVENTION

In order to achieve the above purpose, the invention provides a battery comprising at least a cathode and an anode, the anode comprising a foil covered by an anode coating layer, the cathode comprising a foil facing the anode foil and a flexible tab which projects beyond the cathode foil along a vertical direction parallel to the cathode foil plan, said cathode tab being covered with an electrical insulation cover. The anode comprises an extension of the anode coating layer beyond the anode foil along the vertical direction, said extension being designed so that the cathode tab insulation cover overlaps the extremity of said extension of the anode coating layer.

According to one embodiment, the cathode foil is covered by a cathode coating layer and the cathode presents a gap band without insulation between the cathode coating layer and the cathode tab insulation cover.

According to one embodiment, the extension of the anode coating layer is located only in the vicinity of the cathode tab. According to one embodiment, the extension of the anode coating layer is applied on both sides of the anode foil. According to one embodiment, the anode foil also comprises an extension having dimensions similar to the extension of the anode coating layer.

According to one embodiment, the anode foil and the cathode foil are separated by a separation sheet.

According to one embodiment, the anode also comprises a tab which projects beyond the anode foil along the vertical direction and which is offset from the cathode tab. The cathode tab and the anode tab are used for the electrical connection of the battery.

According to one embodiment, the battery comprises a plurality of such cathodes and a plurality of such anodes which are alternately arranged and separated by a plurality of separating sheets.

### BRIEF DESCRIPTION OF THE FIGURES

Further features and advantages of the invention will become apparent from the following description, with reference to the annexed figures, wherein:
- figure 1 shows a simplified and schematic exploded view of part of a battery according to the prior art;
- figure 2 represents an implementation detail of one embodiment of the invention;
- figure 3a and figure 3b show a sectional view of a battery, without and with the invention respectively.

Corresponding reference numerals refer to the same or corresponding parts in each of the figures.

### DETAILED DESCRIPTION OF AN EMBODIMENT

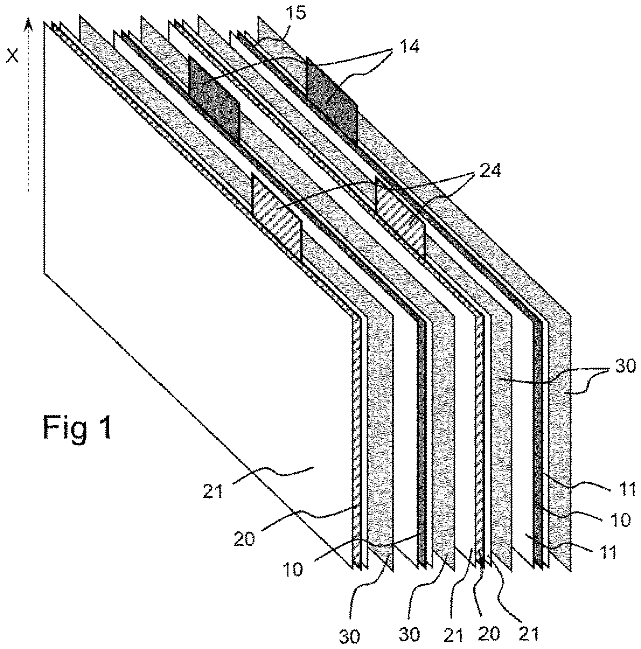

With reference to Figure 1, a battery comprises at least one cathode in the form of a foil **10,** made of aluminium for example, surrounded on each side by a cathode coating layer **11,** containing nickel, manganese, cobalt and additives, for instance. The battery also comprises at least one anode in the form of a foil **20,** made for example of copper, surrounded on each side by an anode coating layer **21,** containing fine graphite powder and additives, for example. The anode **20** and cathode **10** are placed against each other and are separated by a separation sheet **30,** also called a separator, which, for instance, can be a plastic film. The separator **30** must be very thin and porous to allow a free passage of lithium ions between the cathode and anode and is thus fragile. The anode **20** and cathode **10** are flat and rectangular and the anode **20** is typically a few millimeters wider and higher than the cathode **10,** to fully cover the cathode **10** up at its every edge.

An electrode stack battery is usually composed of a stack of such electrodes foils and thus comprises a plurality of cathodes **10** and a plurality of anodes **20** which are alternately arranged and separated by a plurality of separators **30.** For example, Figure 1 shows a stack of two anodes and two cathodes with their respective separators **30** positioned between each.

As an example for the described embodiment, the dimensions of the cathode and anode foils **10, 20** are approximately 200 mm wide and 80-100 mm high. The total thickness of the cathode **10** and anode **20,** including their respective coating layers **11, 21,** is approximately 0.2 mm. The separator **30** is somewhat wider and higher than the anode **20** and has a thickness of about 10-15 µm (micron meters). Depending on its size and performances, a battery can for instance comprise a stack of several dozens of anodes and cathodes.

The cathode **10** comprises a flexible tab **14** which projects beyond an upper horizontal straight edge **15** of the cathode foil **10** along a vertical direction **X** parallel to the cathode foil plan. This cathode tab **14** is only present on one section of the upper edge **15** of the cathode **10.** The cathode tab **14** is, for instance, 40-50 mm wide and around 20 mm high.

Similarly, the anode **20** comprises a flexible tab **24** which projects beyond an upper straight horizontal edge **25** of the anode foil **20** along the vertical direction **X.** This anode tab **24** is only present on one section of the upper edge of the anode **20.** The anode tab **24** is, for instance, 40-50 mm wide and around 20 mm high, and is of course offset from the cathode tab **14** along the upper edge **25.** These tabs **14, 24** are used to electrically connect the electrodes **10, 20** to external terminals of the battery in order to recover the electrical energy. Thus, the tabs **14, 24** must be flexible to facilitate these connections.

However, the cathode **10** being smaller than the anode **20,** and the cathode tab **14** being flexible, the cathode tab **14** can come too close to the anode coating layer **21** (made of conductive materials) which could then induce a short circuit between the cathode and anode in case of loss of the separator **30** locally.

It is known that, to avoid this problem, an electrical insulation cover **12** can be added on each side of the cathode tab **14** to prevent electrical contact between the cathode tab **14** and an adjacent anode coating layer **21,** even in case of loss of the separator locally. The electrical insulation cover **12** can be made with, but not limited to, ceramics and binder. However, there always remains a physical gap band **13** between this insulation cover **12** of the cathode tab **14** and the coating layer **11** of the cathode foil **10,** leaving the metallic cathode foil without protection.

Specifically, this gap band **13** exists since the tab electrical insulation cover 12 cannot be applied too broadly. Indeed, having an insulation cover **12** that is too extensive may encroach on the cathode foil coating layer **11** and thus reduce the effective useful area of the cathode **10,** which would reduce the global efficiency of the battery. Furthermore, the size of the gap band **13** can vary due to unavoidable small disparities in electrode dimensions and/or linearity, during the manufacturing process of the electrodes. Controlling the manufacturing process with higher precision to constantly ensure a stable minimal gap would be costly and challenging, especially in a mass production scenario.

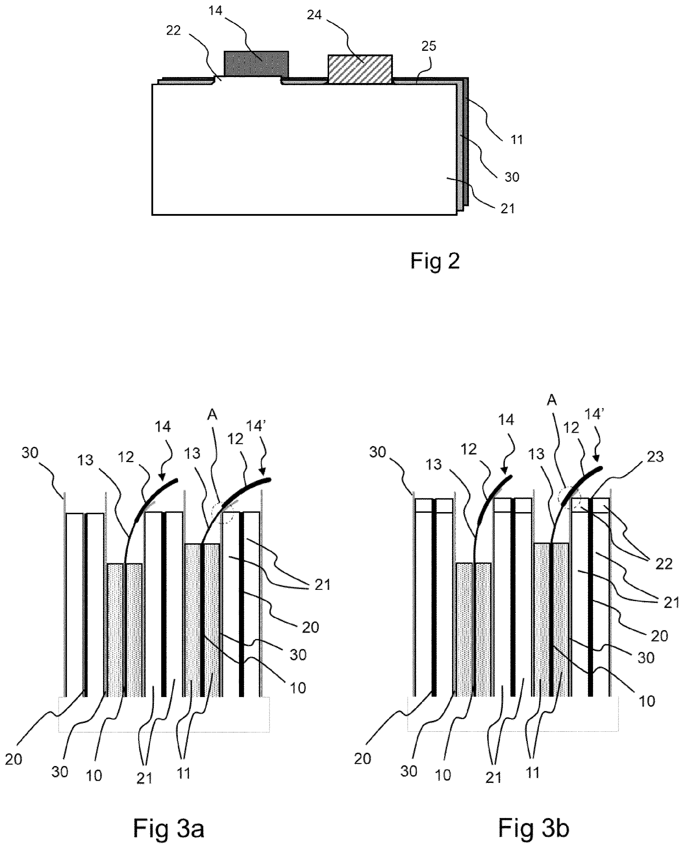

Figures 3a and 3b show two similar sectional views with details of an upper part of the battery along a vertical plan perpendicular to the vertical foils plane, at a point where cathode tabs **14** are present. Figure 3a represents a battery according to the state of the art, whereas Figure 3b represents a battery including the invention.

Figure 3a shows two examples of cathode tabs **14, 14'** each with an insulating cover **12** and a gap band **13.** For the cathode tab **14,** on the left of Figure 3a, when the flexible cathode tab 14 tilts, it can come into contact with the upper edge of the adjacent anode coating layer **21** through its insulating cover **12.** The tab **14** is then protected by its insulating cover **12** which overlaps the extremity of the anode coating layer **21** when the cathode tab **14** tilts, so that, in this case, the double electrical insulation between cathode **10** and anode **20** is secured by the insulating cover **12** and the separator **30.**

However, on the right of Figure 3a, the cathode tab **14'** is somewhat higher than the tab **14,** as for instance the cathode **10** is also a little higher. When the cathode tab **14'** tilts, its gap band **13** can come into contact with the upper edge of the adjacent anode coating layer **21** with the separator **30** for only insulation between them (see point **A),** as the tab **14'** is not protected anymore by its insulating cover **12** which does not overlap the extremity of the anode coating layer **21.** In this case, a short circuit can occur between cathode **10** and anode **20** at point **A,** if ever there is any damage of the separator **30** locally.

For this reason, the present invention proposes to increase the size of each anode coating layer **21** so that, in all cases, the cathode tab **14** is protected by its insulating cover **12** between the cathode tab **14** and the extremity of the adjacent anode coating layer **21,** thus always providing a double insulation with insulating cover **12** plus separator **30.**

Therefore, the battery comprises an extension **22** of the anode coating layer **21** along the vertical direction **X,** this extension **22** being designed so that the cathode tab insulation cover **12** is always overlapping the extremity of said extension **22** of the anode coating layer **21** when the cathode tab **14** tilts. Indeed, at point **A** of Figure 3b, the cathode tab **14'** comes into to contact with the extension **22** of the anode coating layer **21** through its insulating cover **12,** avoiding any risk of short circuit, despite the size of gap band **13.** In other terms, with the extension **22** added, the extremity of the anode coating layer **21** will always cross the cathode tab **14** on the insulation cover **12** beyond the gap band **13.**

Preferably, the extension **22** is made with the same material of the anode coating layer **21** and is manufactured directly during the cutting process of the anode coating layer **21.** Moreover, in a preferred manufacturing process, the anode foil **20** is first plated with its coating layers **21** on each side, then this assembly is cut to the right dimensions for the battery. It means that in this case, the creation of an extension **22** of the anode coating layer **21** also creates a corresponding extension **23** of the anode foil **20** (see figure 3b), this extension **23** having dimensions similar to the extension **22** of the anode coating layer **21.** Advantageously, this process ensures a cheap and simple solution to manufacture and implement the invention.

Figure 2 represents a preferred embodiment of the invention. It shows one anode coating layer **21** with an extension **22** above its upper horizontal edge **25.** The anode coating layer **21** covers the anode foil from which only the anode tab **24** can be seen (as the anode foil **20** and its coating layer **21** on the other side are of course hidden on Figure 2). Behind the anode coating layer **21,** there is one separator **30** and one cathode coating layer **11,** from which the cathode tab **14** appears. According to the preferred embodiment, to optimize the solution and avoid any surcharge of material, the extension **22** does not extend along the whole upper edge **25** of the anode coating layer **21,** but instead is limited to the section of the anode coating layer **21** which is in the vicinity of the corresponding cathode tab **14.** Typically, the height of the extension **22** is about 1 mm.

Thus, the invention thereby provides a solution for the electrode stack configuration of a battery, which always guarantees insulation between anodes and cathodes without risk of any short-circuit, thus enhancing the global reliability of the battery. It also avoids a costly insulation coating process as it allows a greater margin in the gap band between the cathode coating layer and the cathode tab insulation cover.

The scope of the present disclosure is not limited thereto, and other modifications and embodiments can be devised by those skilled in the art, without deviating from the spirit and scope of the invention described in the appended claims.

## Claims

1. Battery comprising at least a cathode and an anode , the anode comprising a foil (20) covered by an anode coating layer (21), the cathode comprising a foil (10) facing the anode foil (20) and a flexible tab (14) which projects beyond the cathode foil (10) along a vertical direction (X) parallel to the cathode foil plan, said cathode tab (14) being covered with an electrical insulation cover (12), **characterized in that** the anode comprises an extension (22) of the anode coating layer (21) beyond the anode foil (20) along the vertical direction (X), said extension (22) being designed so that the cathode tab insulation cover (12) overlaps the extremity of said extension (22) of the anode coating layer (21).

2. Battery according to claim 1, wherein the cathode foil (10) is covered by a cathode coating layer (11) and the cathode presents a gap band (13) without insulation between the cathode coating layer (11) and the cathode tab insulation cover (12).

3. Battery according to claim 1, wherein the extension (22) of the anode coating layer (21) is located only in the vicinity of the cathode tab (14).

4. Battery according to claim 1, wherein the extension (22) of the anode coating layer (21) is applied on both sides of the anode foil (20).

5. Battery according to claim 1, wherein the anode foil (20) also comprises an extension (23) having dimensions similar to the extension (22) of the anode coating layer (21).

6. Battery according to claim 1, wherein the anode foil (20) and the cathode foil (10) are separated by a separation sheet (30).

7. Battery according to claim 1, wherein the anode also comprises a tab (24) which projects beyond the anode foil (20) along the vertical direction (X) and which is offset from the cathode tab (14).

8. Battery according to claim 7, wherein the cathode tab (14) and the anode tab (24) are used for the electrical connection of the battery.

9. Battery according to claim 1, wherein the cathode foil (10) is smaller than the anode foil (20) along the vertical direction (X).

10. Battery comprising a plurality of cathodes (10) and a plurality of anodes (20) which are alternately arranged and separated by a plurality of separating sheets (30), each cathode and each anode being designed according to one of the preceding claims.
